# EUROPÄISCHE PATENTANMELDUNG

(11) **EP 4 414 591 A1**
(43) Veröffentlichungstag der Anmeldung: **14.08.2024**
(21) Anmeldenummer: 24156949.0
(22) Anmeldetag: 09.02.2024
(51) Int. Cl.: F16L 13/10, F16L 41/08, F16L 55/179, F16L 57/00

(54) **ANSCHLUSSBAUTEIL MIT OPTIMIERTER KONTAKTFLÄCHE, UND VERFAHREN ZUR ROHRSANIERUNG**

(30) Priorität: 10.02.2023 DE 202023100661 U
(71) Anmelder: Funke Kunststoffe GmbH, 59071 Hamm-Uentrop (DE)
(72) Erfinder: Funke, Christian, 48324 Sendenhorst (DE); Funke, Matthias, 48324 Sendenhorst (DE)
(74) Vertreter: Patentanwälte Olbricht Buchhold Keulertz

(57) **Zusammenfassung**

Bei einem Anschlussbauteil (4), welches als Rohr ausgestaltet ist oder einen Rohrabschnitt aufweist, und welches dazu bestimmt ist, an ein Hauptrohr angeschlossen zu werden, wobei das Anschlussbauteil (4) einen Bereich aufweist, der dazu bestimmt ist, eine Verklebung des Anschlussbauteils (4) mit dem Hauptrohr und / oder eine Abdichtung des Anschlussbauteils (4) gegen das Hauptrohr zu ermöglichen und mit einem Klebe- oder Abdichtungsmaterial in Kontakt zu kommen, schlägt die Erfindung vor, dass dieser Bereich des Anschlussbauteils (4) herstellerseitig in der Art ausgestaltet ist, dass eine Haftung eines zur Sanierung verwendeten Klebe- oder Abdichtungsmaterials verbessert ist.

## Beschreibung

Die Erfindung betrifft die Verbesserung der Oberflächenhaftung und der Qualität der Anbindung für die Sanierung eines Anschlussbauteils an einem Hauptrohr. Als Anschlussbauteil werden in diesem Zusammenhang solche Bauteile bezeichnet, die als Rohr ausgestaltet sind oder einen Rohrabschnitt aufweisen und die dazu bestimmt sind, an ein Hauptrohr angeschlossen zu werden. Beispielsweise kommen ein Seitenzulauf oder ein Anschlussstutzen als Anschlussbauteil in Frage, welches an ein Hauptrohr in Form eines Abwasserkanals angeschlossen werden soll.

Die Abdichtung von Anschlussbauteilen an Hauptrohren ist für den Bereich der Abwasserkanäle in Form einer Roboter-Sanierungstechnik aus der Praxis bekannt. Man spricht von einer Sanierung in "geschlossener Bauweise".

Es sind im Wesentlichen zwei Fälle zu betrachten, in denen eine Sanierung von Anschlussbauteilen zur Anwendung kommt:
1. Bestehende Anschlüsse sind über die Jahre zum Beispiel durch Setzungen, Materialermüdung oder sonstige Einflüsse undicht geworden.
2. Es werden als Liner oder Inliner bezeichnete Auskleidungen, die z. B. aus GFK oder aus einem mit Harz getränkten Nadelfilz bestehen können, in die Hauptrohre eingezogen. Diese Liner bilden in den alten Rohren dann ein neues, dichtes Innenrohr. Die Anschlussbauteile müssen, nachdem der Liner in die Hauptleitung eingezogen worden ist, dicht an die Liner angebunden werden, z. B. normgerecht dicht nach DIN EN 1610.

Es kommt daher in der Praxis regelmäßig vor, dass Anschlussbauteile an einen zuvor eingezogenen Inliner dicht angebunden werden sollen oder an ein bestehendes Hauptrohr ohne Inliner.

Den Sanierungsverfahren gehen üblicherweise umfangreiche Vorbehandlungsmaßnahmen von Klebeflächen und / oder Kontaktflächen voraus, wie z. B. Säubern, Fräsen, Primern, Bürsten und dergleichen. Bei den Sanierungsverfahren wird in der Praxis häufig eines der folgenden vier Verfahren angewendet:
1. Bei dem Verpressverfahren wird z. B. eine mit Druckluft gefüllte Blase im Anschlussbauteil und im Hauptrohr angepresst. Der verbleibende Hohlraum wird dann mit Harz, Mörtel oder einer anderen Dichtmasse verpresst und somit abgedichtet. Anschließend wird die Blase entlüftet und aus dem Rohranschlussbereich entnommen.
2. Bei dem Injektionsverfahren wird eine formbare und ggf. fließfähige Dichtmasse, z. B. Harz, Mörtel, und dergleichen, in Hohlräume injiziert.
3. Setzen eines Hutprofils: bei diesem Verfahren wird ein weiches Material, z. B. Nadelfilz, welches mit Harz getränkt ist und die Grundform eines Hutes hat (allerdings mit Loch), über die Nahtstelle zwischen Anschlussbauteil und Hauptrohr geklebt.
4. Bei dem Spachtelverfahren wird die Schadstelle durch ein Verspachteln mit einem Harz, Mörtel o. ä. geschlossen.

Bei allen genannten Sanierungsverfahren ist die Problematik gegeben, dass die Vorbereitung der Flächen, auf denen Harze, Mörtel, Dichtmasse, Hutprofile etc. haften müssen, sehr sorgfältig durchgeführt werden muss und über den Erfolg der Sanierungsmaßnahme entscheidet. Unter den in der Praxis im Abwasserkanal herrschenden Bedingungen gelingt es häufig allerdings nur mangelhaft, die Kontaktflächen / Klebeflächen so vorzubereiten, dass anschließend eine optimale Sanierung im Hinblick auf eine erforderliche Verklebung oder Abdichtung gelingen kann. Die Vorbereitungsarbeiten werden erschwert durch die Sichtbedingungen, wenn mittels Kamera und Fernbedienung die verwendeten Werkzeuge ferngesteuert werden, zudem haben sich typischerweise nach mehrjähriger Nutzung Ablagerungen in Form von Sielhäuten aus Fett, Schmutz und dergleichen an den zu behandelnden Oberflächen gebildet, welche die Bearbeitung erschweren.

Ein weiteres Problem besteht darin, dass insbesondere bei materialabtragenden vorbereitenden Arbeiten, die zur Säuberung der Oberflächen durchgeführt werden, wie z. B. bei Fräsarbeiten, die Wandungen der Bauteile bereichsweise vollständig abgetragen und somit durchtrennt werden können.

Der Erfindung liegt die Aufgabe zugrunde, ein Anschlussbauteil dahingehend zu verbessern, dass die Haftung von Materialien, die zur Verklebung und / oder zur Abdichtung eingesetzt werden, besser, dauerhafter und mit weniger Aufwand gelingt. Weiterhin liegt der Erfindung die Aufgabe zugrunde, ein Verfahren zur Rohrsanierung anzugeben, welches eine einfachere Durchführung der Sanierungsarbeiten und eine möglichst dauerhaft dichte Verbindung zwischen einem Hauptrohr und einem daran angeschlossenen Anschlussbauteil ermöglicht.

Diese Aufgabe wird durch ein Anschlussbauteil mit den Merkmalen des Anspruchs 1 sowie durch ein Verfahren nach Anspruch 9 gelöst. Vorteilhafte Ausgestaltungen sind in den Unteransprüchen beschrieben.

Die Erfindung schlägt mit anderen Worten vor, den Bereich des Anschlussbauteils, der mit dem Klebe- oder Abdichtungsmaterial in Kontakt kommen wird, um eine Verklebung mit und / oder eine Abdichtung des Anschlussbauteils gegen das Hauptrohr zu ermöglichen, herstellerseitig in der Art vorzubereiten, dass die Haftung des Klebe- oder Abdichtungsmaterials verbessert ist im Vergleich zu den bislang bekannten Anschlussbauteilen, bei denen der betreffende Bereich nicht eigens für den Kontakt mit dem Klebe- oder Abdichtungsmaterial ausgestaltet sind.

Zum Abdichten können vorgeformte Dichtungen verwendet werden, z. B. als Dichtungsringe aus Elastomerwerkstoffen. Alternativ dazu können fließfähige oder pastöse Massen verwendet werden, die fließfähigen oder pastösen Klebstoffen ähnlich sind. Sowohl für eine Verklebung als auch für eine Abdichtung bei Verwendung solcher Massen hängt deren Wirksamkeit von den Adhäsionskräften ab, mit denen die jeweilige Masse an den benachbarten Bauteilen anhaftet. Was die Ausgestaltung eines Anschlussbauteils betrifft, wird daher nachfolgend nicht notwendigerweise zwischen Abdichtungs- und Klebesituationen unterschieden, sofern dies die Anhaftung einer Abdichtungs- oder Klebstoffmasse an dem Anschlussbauteil betrifft. Vielmehr schließt der verwendete Begriff des Klebens oder einer Verklebung oder dergleichen auch das Abdichten oder eine Abdichtung ein.

Im Vergleich dazu, die Vorbehandlungsmaßnahmen von Klebeflächen an der Baustelle durchzuführen, kann eine gleichmäßige Beschaffenheit des gesamten betreffenden Bereichs eines Anschlussbauteils gewährleistet werden, und auch eine Vielzahl von Anschlussbauteilen weist stets gleichbleibende Eigenschaften der jeweiligen Bereiche auf, weil die Vorbehandlungsmaßnahmen beim Hersteller des Anschlussbauteils unter standardisierten Bedingungen, z. B. witterungsunabhängig, durchgeführt werden können.

Dabei ist es unerheblich, ob es sich um Abzweigformteile oder Anschlussstutzen (z. B. ähnlich dem aus der Praxis bekannten FABEKUN Sattelstück Connex Anschluss) handelt, die nachträglich eingebaut werden.

Der Umfang der notwendigen Arbeiten, die zur Vorbereitung der Verklebung / Sanierung an der Baustelle durchgeführt werden müssen, kann erfindungsgemäß minimiert werden, was die Durchführung der Sanierung insgesamt erleichtert. Gleichzeitig kann die Haltbarkeit der Sanierungsmaßnahme durch eine verbesserte Qualität der Verklebung bzw. Abdichtung erhöht werden.

Vorschlagsgemäß kann die Sanierung durch folgende Maßnahmen verbessert werden:
- Es wird ein grundsätzlich klebefähiger Werkstoff verwendet, aus dem die Anschlussbauteile bestehen, z. B. ein Seitenzulauf oder ein Anschlussstutzen.
   Unpolare Kunststoffe wie z. B. Polyethylen (PE) oder Polypropylen (PP), wie sie für Kanalrohre verwendet werden, sind für Verklebungen schlecht geeignet, beispielsweise werden derartige Werkstoffe zur Herstellung von Behältern oder Behälterverschlüssen verwendet, die nicht mit dem Behälterinhalt verkleben sollen, z. B. mit Leim, Klebstoff, Dichtungsmittel oder dergleichen.
   Im Vergleich zu solchen schlecht verklebbaren Werkstoffen bietet ein erfindungsgemäß verwendeter, grundsätzlich verklebbarer Werkstoff, z. B. ein polarer Kunststoff wie Polyvinylchlorid (PVC), eine erheblich bessere Anhaftung des Klebe- oder Dichtungsmittels.
   Der Begriff der grundsätzlichen Verklebbarkeit betrifft dabei die Möglichkeiten, nicht nur unter Laborbedingungen, sondern vielmehr unter Praxisbedingungen eine zuverlässige Anhaftung des Klebe- oder Dichtungsmittels an dem Anschlussbauteil erreichen zu können. Dies betrifft die in der Praxis, nämlich an der Baustelle, herrschenden Witterungsbedingungen in Form von Temperatur und Luftfeuchtigkeit, sowie die in der Praxis beherrschbaren Handhabungsbedingungen in Form von Anpresskräften und Haltedauer beim Zusammenfügen benachbarter Bauteile.
- Die Anschlussbauteile weisen in dem betreffenden Bereich, also an den Flächen, die dazu bestimmt sind, mit Dichtungsmassen oder Dichtungs-Formteilen in Kontakt zu kommen, an der Innenseite und / oder an der Außenseite einen oder mehrere Hinterschnitte auf, z. B. in Form umlaufender Nuten.
   Dies kann zur Vergrößerung der Klebefläche dienen und damit eine bessere Haftung unterstützen. Alternativ kann dies bei der Verwendung von Formteilen - z. B. wenn an Stelle einer Dichtungsmasse eine Profildichtung zum Einsatz kommt - deren bessere Verankerung bewirken.
- Zur Vergrößerung der Klebefläche sind die zur Abdichtung bzw. Verklebung vorgesehenen Oberflächen der Anschlussbauteile bereits werkseitig aufgerauht.
   Einige Anschlussbauteilen weisen Oberflächen auf, die aufgrund des verwendeten Werkstoffs, wie z. B. eines Kunststoffs, und aufgrund des Herstellungsverfahrens, z. B. eines Spritzgießverfahrens, glatt ausgestaltet sind, um nämlich eine problemlose Entnahme des Werkstücks aus der Gießform sicherzustellen.
   Bei Anschlussbauteilen mit glatter Oberfläche kann die Anhaftung einer Klebe- oder Abdichtungsmasse in dem Bereich des Anschlussbauteils, der mit Dichtungsmassen oder Dichtungs-Formteilen in Kontakt kommen soll, dadurch verbessert werden, dass im Anschluss an den ersten Herstellungsschritt, z. B. an den erwähnten Spritzguss, in einem nachfolgenden Herstellungsschritt das Anschlussbauteil in dem betreffenden Bereich aufgerauht wird. Dies kann z. B. chemisch erfolgen, indem der betreffende Bereich chemisch angegriffen und dadurch aufgerauht wird, oder die Nachbearbeitung kann mechanisch erfolgen, indem der betreffende Bereich durch eine spanabhebende Bearbeitung wie z. B. einen Fräs- oder Schleifvorgang bearbeitet wird.
- Zur Vergrößerung der Abdichtungs- bzw. Klebefläche weisen die Anschlussbauteile in den zur Verklebung vorgesehenen Oberflächenbereichen Rippen oder Stege auf.
   Eine Vergrößerung der Fläche ergibt bei gleichen Anhaftungseigenschaften einen größeren Widerstand gegen Trennkräfte und somit eine zuverlässigere Anbindung des Abdichtungs- bzw. Klebstoffmaterials an das Anschlussbauteil. Im Vergleich zu einer Aufrauhung des Anschlussbauteils, was als mikroskopische Unebenheit des Anschlussbauteils bezeichnet werden kann, bewirken Rippen oder Stege, die als makroskopische Unebenheiten des Anschlussbauteils bezeichnet werden können, auch noch eine formschlüssige Verzahnung des Abdichtungs- bzw. Klebstoffmaterials mit dem Anschlussbauteil, so dass ein erhöhter Widerstand gegen Schub- oder Scherkräfte erreicht wird, die parallel zur Oberfläche des Anschlussbauteils wirken.
- Die zur Abdichtung bzw. Verklebung vorgesehenen Oberflächen der Anschlussbauteile sind werkseitig mit einem entfernbaren Verschmutzungsschutzelement in Form einer Abdeckung versehen.
   Das Schutzelement ist so ausgestaltet, dass er mittels eines Roboters auch dann noch entfernt werden kann, wenn das Anschlussbauteil zuvor bereits mehrere Jahre in einem Hauptrohr genutzt worden ist. Die Entfernung des Schutzelementes gibt dann eine zur Abdichtung bzw. Klebung optimal vorbereitete und unverschmutzte Fläche frei.
   Beispielsweise kann das Schutzelement aus einem Kunststoff, einem Elastomer oder dergleichen bestehen und z. B. als Folie oder als Formteil ausgestaltet sein. Die Entfernbarkeit durch einen Roboter, der autark oder fernbedient arbeitet, kann auf verschiedene Weisen sichergestellt werden. Z. B. kann dies mittels einer Lasche erreicht werden, die das Schutzelement aufweist und die in an sich bekannter Weise vom Roboter erfasst werden kann, z. B. mittels eines zangenartigen Werkzeugs. Falls die Lasche ein Loch aufweist oder das Schutzelement an Stelle einer großflächigen Lasche einen vergleichsweise schmaleren Bügel aufweist, kann die Entfernung des Schutzelementes mittels eines hakenartigen Werkzeugs erfolgen. In den genannten Beispielsfällen kann das Schutzelement jeweils entfernt werden, indem an der Lasche bzw. dem Bügel gezogen wird.
   Die Abdeckung als Schutz für die Klebefläche kann an der Innenseite und / oder an der Außenseite des Anschlussbauteils angeordnet sein, z. B. einteilig mit einem U-förmigen Querschnitt um das Spitzende des Anschlussbauteils greifend ausgeführt sein.
   Jede dieser genannten Maßnahmen kann einzeln durchgeführt werden oder mit einer beliebigen Anzahl jeder anderen dieser Maßnahmen kombiniert werden, einschließlich der Möglichkeit, alle genannten Maßnahmen zusammen anzuwenden.
   Die Erfindung betrifft in einer als vorteilhaft erachteten Ausgestaltung Anschlussbauteile, die aus Kunststoff-Werkstoffen bestehen, z. B. aus dem oben genannten Werkstoff PVC.
   Durch die Verwendung eines erfindungsgemäßen Anschlussbauteils können die Sanierungsarbeiten an der Baustelle vereinfacht werden, da eine Behandlung der Kontaktflächen, an denen das Anschlussbauteil mit Klebe- oder Dichtungsmaterial in Kontakt kommen wird, nicht an der Baustelle durchgeführt werden müssen. Hierdurch wird die Durchführung der Sanierungsarbeiten in kürzerer Zeit möglich. Eine Bearbeitung des zunächst hergestellten Anschlussbauteils kann herstellerseitig an dafür eingerichteten Arbeitsplätzen erwartungsgemäß in kürzerer Zeit erfolgen als an der Baustelle. Sowohl für die Bereitstellung des Anschlussbauteils als auch für die Durchführung der Sanierungsarbeiten ergeben sich somit wirtschaftliche Vorteile.
   Die Haltbarkeit der Abdichtung oder Verklebung wird dadurch verbessert, dass die Kontaktflächen herstellerseitig für die Abdichtung oder Verklebung ausgestaltet sind und damit standardisierte Oberflächeneigenschaften bereitgestellt werden, die für das Anhaften des Klebe- oder Dichtungsmaterials optimiert sind. Dadurch wird das unkontrollierte Austreten von Medien aus einer Rohrleitung in die Umwelt vermieden, was ökologisch vorteilhaft ist. Wenn die Schaffung einer für die Abdichtung oder Verklebung optimierten Oberfläche eine spanabhebende Behandlung des Anschlussbauteils einschließt und das Anschlussbauteil aus Kunststoff besteht, können die bei der spanabhebende Bearbeitung anfallenden Späne an dafür eingerichteten Arbeitsplätzen aufgefangen werden, so dass sich ökologisch ein Vorteil ergibt im Vergleich zu einer spanabhebenden Bearbeitung an der Baustelle, wo die Späne üblicherweise unkontrolliert in die Umwelt gelangen.
   Ausführungsbeispiele der Erfindung werden nachfolgend anhand der rein schematischen Darstellungen näher erläutert. Dabei zeigt
      - Fig. 1: ein erstes Ausführungsbeispiel eines an ein Hauptrohr angeschlossenen Anschlussbauteils,
      - Fig. 2 und 3: weitere Ausführungsbeispiele eines solchen Anschlusses,
      - Fig. 4: einen Schnitt durch ein Anschlussbauteil, und
      - Fig. 5: ein weiteres Ausführungsbeispiele eines an ein Hauptrohr angeschlossenen Anschlussbauteils.

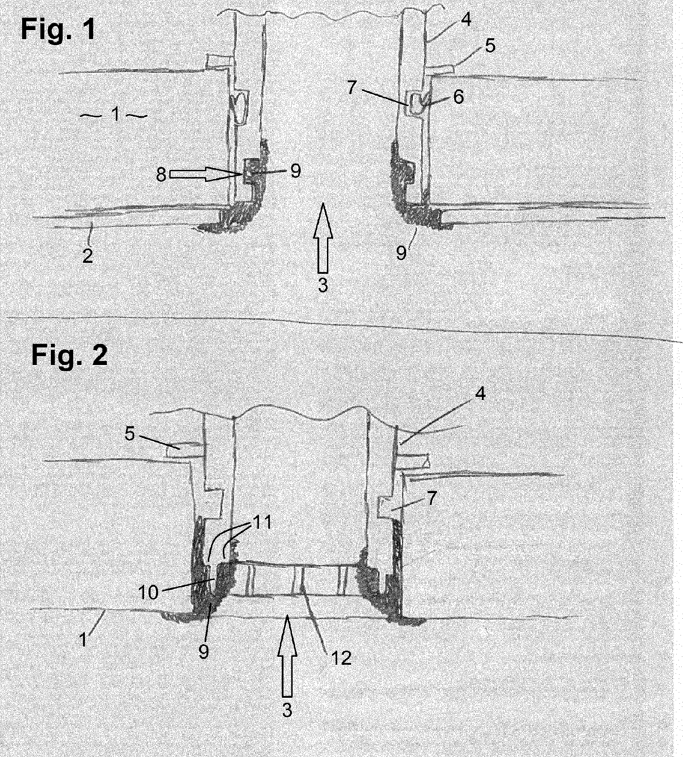

   Fig. 1 zeigt einen Schnitt in Längsrichtung durch ein Hauptrohr 1, wobei das Hauptrohr 1 bei dem dargestellten Ausführungsbeispiel aus einem mineralischen Baustoff besteht und z. B. als Betonrohr ausgestaltet ist und eine dementsprechend große Wandstärke aufweist. Innen ist das Hauptrohr 1 mit einem Inliner 2 ausgekleidet, der aus einem mit Fasern verstärkten, ausgehärteten Harz besteht. Abweichend von dem beschriebenen Ausführungsbeispiel kann es sich bei dem Wandabschnitt auch um den Abschnitt einer Behälterwand statt eines Hauptrohrs 1 handeln.
   Ein Wandabschnitt des Hauptrohrs 1 ist mit einer Anschlussbohrung 3 versehen und ein Anschlussbauteil 4 in Form eines Anschlussstutzens schließt an das Hauptrohr 1 an, indem es sich bis in die Anschlussbohrung 3 und somit bis in die Wand des Hauptrohrs 1 erstreckt. Anhand der deutlich geringeren Wandstärke des Anschlussbauteils 4 ist deutlich, dass das Anschlussbauteil 4 aus einem anderen Werkstoff besteht als das Hauptrohr 1. Bei dem dargestellten Ausführungsbeispiel besteht es aus Kunststoff. Ein umlaufender Kragen 5 hilft als Anschlag, eine definierte Eindringtiefe sicherzustellen, wenn das Anschlussbauteil 4 in die Anschlussbohrung 3 eingeführt wird.
   Eine erste Abdichtung zwischen dem Anschlussbauteil 4 und dem Wandabschnitt des Hauptrohrs 1, wo dieses um die Anschlussbohrung 3 verläuft, wird durch eine Dichtung 6 bewirkt. Die Dichtung 6 kann als Formteil, z. B. als Dichtungsring aus einem elastomeren Werkstoff ausgestaltet sein, welche in eine Dichtungsnut 7 des Anschlussbauteils 4 eingelegt werden kann, bevor das Anschlussbauteil 4 in die Anschlussbohrung 3 eingeführt wird. Oder die Dichtung 6 kann als Dichtungsmasse ausgestaltet sein, welche in die Dichtungsnut 7 injiziert wird, nachdem das Anschlussbauteil 4 in die Anschlussbohrung 3 eingeführt worden ist.
   Das Anschlussbauteil 4 ist durch seiner herstellerseitige Ausgestaltung dazu geeignet, eine bessere Verbindung mit einem Abdichtungswerkstoff oder Klebstoff zu ermöglichen. Bei dem Ausführungsbeispiel der Fig. 1 besteht diese Ausgestaltung darin, dass das Anschlussbauteil 4 einen Hinterschnitt in Form einer ringförmig umlaufenden Nut 8 in seiner radial inneren Oberfläche aufweist. Durch die Nut 8 wird erstens die Kontaktfläche vergrößert, über welche ein Abdichtungs- oder Klebematerial 9 Kontakt mit dem Anschlussbauteil 4 hat, und zweitens wird eine formschlüssige Verbindung des Abdichtungs- oder Klebematerials 9 mit dem Anschlussbauteil 4 geschaffen, die einen verbesserten Halt des Abdichtungs- oder Klebematerials 9 an dem Anschlussbauteil 4 insbesondere bei Kräften bietet, die in axialer Richtung des Anschlussbauteils 4 auf das Abdichtungs- oder Klebematerial 9 wirken. Das Abdichtungs- oder Klebematerial 9 kann eine formlose pastöse Masse z. B. aus einem Harz- oder Mörtelwerkstoff sein, oder es kann als Formkörper ausgestaltet sein, z. B. als Hutprofil, welches beispielsweise aus einem harzgetränkten Faserwerkstoff besteht.
   Fig. 2 zeigt in einer Ansicht ähnlich Fig. 1 ein zweites Ausführungsbeispiel eines Anschlussbauteils 4. Rein beispielhaft ist dargestellt, dass das Hauptrohr 1 auch ohne einen Inliner vorliegen kann und dass die Dichtung 6 bei Bedarf entfallen kann, weil ihre Funktion auch durch das Abdichtungs- oder Klebematerial 9 erfüllt wird.
   Das Anschlussbauteil 4 der Fig. 2 ist durch seiner herstellerseitige Ausgestaltung dazu geeignet, eine bessere Verbindung mit dem Abdichtungs- oder Klebematerial 9 zu ermöglichen. Diese Ausgestaltung besteht darin, dass das Anschlussbauteil 4 an seiner Stirnseite, die in das Hauptrohr ragt, einen Steg 10 aufweist, der mittig entlang der Stirnseite verläuft, so dass radial innerhalb und außerhalb des Stegs 10 jeweils eine Stufe 11 geschaffen wird. Der Steg 10 ist weiterhin mit Rippen 12 versehen, so dass diese mehrfach profilierte Ausgestaltung dieses Endes des Anschlussbauteils 4 die Kontaktfläche vergrößert wird, über welche das Abdichtungs- oder Klebematerial 9 Kontakt mit dem Anschlussbauteil 4 hat.

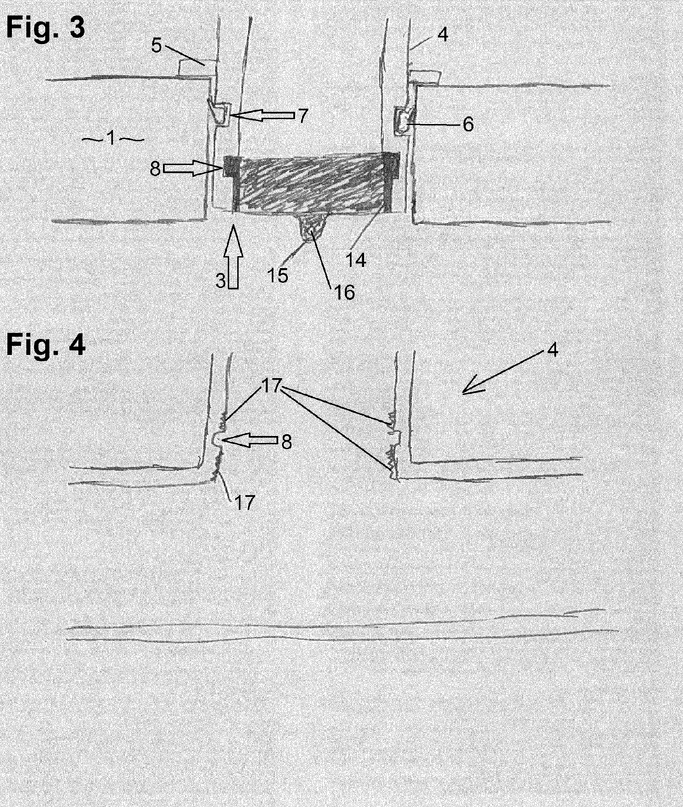

   Fig. 3 zeigt in einer Ansicht ähnlich Fig. 2 ein drittes Ausführungsbeispiel eines Anschlussbauteils 4. Das Anschlussbauteil 4 selbst ist mit dem der Fig. 1 vergleichbar. Die Ausgestaltung, um eine bessere Verbindung mit einem Abdichtungs- oder Klebematerial 9 zu ermöglichen, besteht bei diesem dritten Ausführungsbeispiel darin, dass das Anschlussbauteil 4 mit einem Schutzelement 14 ausgestattet ist, welches einen Verschmutzungsschutz bildet, indem es die Oberfläche des Anschlussbauteils 4 abdeckt, bis ein Abdichtungs- oder Klebematerial 9 mit diesem zuvor abgedeckten Bereich der Oberfläche in Kontakt kommen soll. Dies kann bei der Montage des Anschlussbauteils 4 der Fall sein oder ggf. auch erst nach einiger Nutzungsdauer, z. B. wenn in das Hauptrohr 1 ein Inliner eingezogen werden soll und dann ein dichter Anschluss des Anschlussbauteils 4 an den Inliner gewährleistet werde soll.
   Das Schutzelement 14 ist als Formstück aus einem Elastomermaterial ausgestaltet, wobei ein sicherer Sitz des Schutzelements 14 in dem Anschlussbauteil 4 dadurch gesichert ist, dass das Schutzelement 14 formschlüssig in die Nut 8 eingreift. Wenn der von dem Schutzelement 14 abgedeckte Bereich der Oberfläche des Anschlussbauteils 4 freigelegt werden soll, kann das Schutzelement 14 an einer Lasche 15 erfasst werden. Dies kann je nach Einbausituation manuell erfolgen oder mittels eines ferngesteuerten Roboters. Dabei kann je nach Ausgestaltung des verwendeten Werkzeugs die Lasche 15 beispielsweise mittels einer Zange erfasst werden oder alternativ mittels eines Hakens, der in ein Loch 16 der Lasche 15 eingreifen kann.
   Aufgrund des verwendeten elastomeren Werkstoffs kann das Schutzelement 14 zunächst verformt werden, indem die Lasche 15 in Richtung zur Mittelachse des Anschlussbauteils 4 geführt wird, so dass das Schutzelement 14 über einen ausreichend großen Anteil seines Umfangs aus der Nut 8 herausgezogen wird. Anschließend kann das Schutzelement 14 vollständig aus dem Anschlussbauteil 4 entnommen werden.
   Der Bereich des Anschlussbauteils 4, der mit dem Abdichtungs- oder Klebematerial 9 in Kontakt kommen soll, wie dies beispielsweise aus Fig. 1 ersichtlich ist, liegt nun ohne Verschmutzungen frei, so dass das Abdichtungs- oder Klebematerial 9 dementsprechend wirksam an dem Anschlussbauteil 4 anhaften kann.
   Fig. 4 zeigt einen Schnitt durch ein Anschlussbauteil 4, das als T-förmiger Abzweig ausgestaltet ist, der auch als 90°-Abzweig bezeichnet wird, und das als einteiliges Spritzguss-Bauteil ausgestaltet ist. Solche Bereiche der Oberfläche, die bei einem Anschluss an ein in Fig. 4 nicht dargestelltes Hauptrohr in Kontakt mit einem Abdichtungs- oder Klebematerial 9 kommen sollen, sind mit einer Mikroprofilierung in Form einer Aufrauhung 17 sowie mit einer Makroprofilierung in Form einer Nut 8 versehen. Auf diese Weise wird erstens eine besonders große Oberfläche und zweitens ein mechanischer Formschluss für den Kontakt mit dem Abdichtungs- oder Klebematerial 9 ermöglicht.

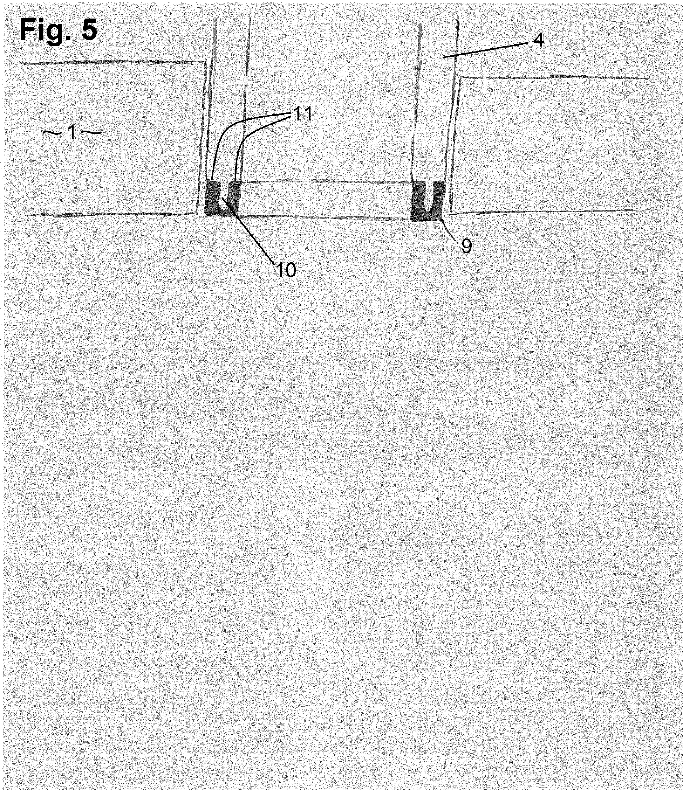

   Fig. 5 zeigt in einer Ansicht ähnlich Fig. 2 ein viertes Ausführungsbeispiel eines Anschlussbauteils 4. Das Anschlussbauteil 4 ist annähernd mit dem der Fig. 2 vergleichbar und weist einen ringförmig umlaufenden und sich in axialer Richtung erstreckenden Steg 10 an der Stirnseite des Anschlussbauteils 4 auf. Die Ausgestaltung, um eine bessere Verbindung mit einem Abdichtungs- oder Klebematerial 9 zu ermöglichen, besteht wie bei dem Ausführungsbeispiel der Fig. 3 darin, dass das Anschlussbauteil 4 mit einem Schutzelement 14 ausgestattet ist, welches einen Verschmutzungsschutz bildet. Auch bei dem Ausführungsbeispiel der Fig. 5 verläuft das Schutzelement 14 insgesamt ringförmig, es weist im Unterschied zu dem Ausführungsbeispiel der Fig. 3 jedoch einen U-förmigen Querschnitt auf und ist auf den Steg 10 aufgesteckt, so dass es sowohl den Steg 10 komplett abdeckt als auch die beiden Stufen 11.

### Bezugszeichen:

- 1: Hauptrohr
- 2: Inliner
- 3: Anschlussbohrung
- 4: Anschlussbauteil
- 5: Kragen
- 6: Dichtung
- 7: Dichtungsnut
- 8: Nut
- 9: Abdichtungs- oder Klebematerial
- 10: Steg
- 11: Stufe
- 12: Rippe
- 14: Schutzelement
- 15: Lasche
- 16: Loch
- 17: Aufrauhung

## Patentansprüche

1. Anschlussbauteil (4),
welches als Rohr ausgestaltet ist oder einen Rohrabschnitt aufweist,
und welches dazu bestimmt ist, an ein Hauptrohr (1) angeschlossen zu werden,
wobei das Anschlussbauteil (4) einen Bereich aufweist, der dazu bestimmt ist, eine Verklebung des Anschlussbauteils (4) mit dem Hauptrohr (1) und / oder eine Abdichtung des Anschlussbauteils (4) gegen das Hauptrohr (1) zu ermöglichen und mit einem Klebe- oder Abdichtungsmaterial (9) in Kontakt zu kommen,
**dadurch gekennzeichnet,**
**dass** dieser Bereich des Anschlussbauteils (4) herstellerseitig in der Art ausgestaltet ist, dass eine Haftung eines zur Sanierung verwendeten Klebe- oder Abdichtungsmaterials (9) verbessert ist.

2. Anschlussbauteil nach Anspruch 1,
**dadurch gekennzeichnet,**
**dass** das Anschlussbauteil (4) aus einem grundsätzlich klebefähigen Werkstoff besteht.

3. Anschlussbauteil nach Anspruch 1 oder 2,
**dadurch gekennzeichnet,**
**dass** das Anschlussbauteil (4) an den Flächen, die dazu bestimmt sind, mit Klebe- oder Abdichtungsmaterial (9) in Kontakt zu kommen, an der Innenseite und / oder an der Außenseite einen oder mehrere Hinterschnitte aufweist.

4. Anschlussbauteil nach einem der vorhergehenden Ansprüche,
**dadurch gekennzeichnet,**
**dass** das Anschlussbauteil (4) zur Verklebung vorgesehene Oberflächen aufweist, die werkseitig mit einer Aufrauhung (17) versehen sind.

5. Anschlussbauteil nach einem der vorhergehenden Ansprüche,
**dadurch gekennzeichnet,**
**dass** das Anschlussbauteil (4) zur Verklebung vorgesehene Oberflächenbereiche aufweist, die Rippen (12) oder Stege (10) aufweisen.

6. Anschlussbauteil nach einem der vorhergehenden Ansprüche,
**dadurch gekennzeichnet,**
**dass** das Anschlussbauteil (4) zur Verklebung vorgesehene Oberflächenbereiche aufweist, die mit einem entfernbaren Schutzelement (14) in Form einer Abdeckung versehen sind.

7. Anschlussbauteil nach einem der vorhergehenden Ansprüche,
**dadurch gekennzeichnet,**
**dass** das Anschlussbauteil (4) aus Kunststoff besteht.

8. Anschlussbauteil nach Anspruch 7,
**dadurch gekennzeichnet,**
**dass** das Anschlussbauteil (4) aus PVC besteht.

9. Verfahren zur Rohrsanierung,
wobei ein Anschlussbauteil (4), welches als Rohr ausgestaltet ist oder einen Rohrabschnitt aufweist, an ein Hauptrohr (1) angeschlossen wird,
und wobei das Verfahren die folgenden Verfahrensschritte aufweist:
• es wird eine Anschlussbohrung (3) in das Hauptrohr (1) eingebracht oder eine bereits vorhandene Bohrung als Anschlussbohrung (3) genutzt,
• ein Rohrabschnitt des Anschlussbauteils (4) wird in die Anschlussbohrung (3) eingeführt,
• das Anschlussbauteil (4) wird gegen das Hauptrohr (1) abgedichtet oder mit dem Hauptrohr (1) verklebt,
**dadurch gekennzeichnet,**
**dass** ein Anschlussbauteil (4) bereitgestellt wird, das herstellerseitig, vor seiner Anlieferung an die Sanierungs-Baustelle, in der Art ausgestaltet ist, dass eine Haftung eines zur Sanierung verwendeten Klebe- oder Abdichtungsmaterials (9) an dem Anschlussbauteil (4) verbessert ist.

10. Verfahren nach Anspruch 9,
**dadurch gekennzeichnet,**
**dass** ein Anschlussbauteil (4) aus einem Werkstoff bereitgestellt wird, der unter den praxistypischen, an der Sanierungs-Baustelle herrschenden Bedingungen klebefähig ist.

11. Verfahren nach Anspruch 9 oder 10,
**dadurch gekennzeichnet,**
**dass** ein Anschlussbauteil (4) zunächst werkseitig an den Flächen, die dazu bestimmt sind, mit Klebe- oder Abdichtungsmaterial (9) in Kontakt zu kommen, an der Innenseite und / oder an der Außenseite mit einem oder mehreren Hinterschnitten versehen wird, bevor es an der Sanierungs-Baustelle bereitgestellt wird.

12. Verfahren nach einem der Ansprüche 9 bis 11,
**dadurch gekennzeichnet,**
**dass** ein Anschlussbauteil (4) zunächst werkseitig an den zur Verklebung vorgesehenen Oberflächen mit einer Aufrauhung (17) versehen wird, bevor es an der Sanierungs-Baustelle bereitgestellt wird.

13. Verfahren nach einem der vorhergehenden Ansprüche 9 bis 12,
**dadurch gekennzeichnet,**
**dass** das Anschlussbauteil (4) zunächst werkseitig an den zur Verklebung vorgesehenen Oberflächen mit Rippen (12) oder Stegen (10) versehen wird, bevor es an der Sanierungs-Baustelle bereitgestellt wird.

14. Verfahren nach einem der vorhergehenden Ansprüche 9 bis 13,
**dadurch gekennzeichnet,**
**dass** das Anschlussbauteil (4) zunächst werkseitig an den zur Verklebung vorgesehenen Oberflächenbereichen mit einem entfernbaren Schutzelement (14) in Form einer Abdeckung versehen wird, bevor es an der Sanierungs-Baustelle bereitgestellt wird.

15. Verfahren nach einem der vorhergehenden Ansprüche 9 bis 14,
**dadurch gekennzeichnet,**
**dass** ein Anschlussbauteil (4) bereitgestellt wird, das aus Kunststoff besteht.

16. Verfahren nach Anspruch 15,
**dadurch gekennzeichnet,**
**dass** ein Anschlussbauteil (4) bereitgestellt wird, das aus PVC besteht.
